(19) Europäisches Patentamt
European Patent Office
Office européen des brevets

(11) **EP 1 102 623 B1**

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(21) Anmeldenummer: **99952287.3**

(22) Anmeldetag: **02.08.1999**

(51) Int Cl.:
*B01D 69/02* *(2006.01)*      *B01D 67/00* *(2006.01)*
*B01J 20/00* *(2006.01)*      *C12N 11/00* *(2006.01)*

(86) Internationale Anmeldenummer:
**PCT/DE1999/002429**

(87) Internationale Veröffentlichungsnummer:
**WO 2000/007702 (17.02.2000 Gazette 2000/07)**

(54) **VERFAHREN ZUR HERSTELLUNG TEMPLAT-GEPRÄGTER MATERIALIEN**

METHOD FOR THE PRODUCTION OF TEMPLATE-TEXTURED MATERIALS

PROCEDE DE PRODUCTION DE MATIERES A IMPRESSION DE MATRICES

(84) Benannte Vertragsstaaten:
**AT BE CH CY DE DK ES FI FR GB GR IE IT LI LU MC NL PT SE**

(30) Priorität: **03.08.1998 DE 19836180**
**24.11.1998 DE 19855290**
**02.08.1999 DE 19936992**

(43) Veröffentlichungstag der Anmeldung:
**30.05.2001 Patentblatt 2001/22**

(73) Patentinhaber: **PolyAn Gesellschaft zur Herstellung von Polymeren**
**für spezielle Anwendungen und Analytik mbH**
**13086 Berlin (DE)**

(72) Erfinder:
• **ULBRICHT, Mathias**
**D-10407 Berlin (DE)**
• **PILETSKI, Sergiy**
**Kiev 187 252187 (UA)**
• **SCHEDLER, Uwe**
**15366 Neuenhagen (DE)**
• **MATUSCHEWSKI, Heike**
**15366 Neuenhagen (DE)**

(74) Vertreter: **Schneider, Henry et al**
**Anwaltskanzlei**
**Gulde Hengelhaupt Ziebig & Schneider**
**Wallstrasse 58/59**
**10179 Berlin (DE)**

(56) Entgegenhaltungen:
**EP-A- 0 764 680      WO-A-93/05068**
**WO-A-94/16319      WO-A-96/41235**
**WO-A-97/22410      US-A- 5 786 428**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Herstellung Templat-geprägter Materialien, in Gestalt Templat-geprägter Polymere (TGP) aus wäßrigen Lösungen sowie TGP auf einem festen Träger (z.B. Membranen).

In der Biotechnologie benötigt man für Produkte wie Enzyme, monoklonale Antikörper oder rekombinante Proteine neue effiziente Trenn- und Reinigungsstrategien. Dies gilt auch für synthetische Wirkstoffe, insbesondere wenn sie eine komplexere Struktur oder/und ein höheres Molekulargewicht bzw. eine eingeschränkte Stabilität aufweisen.

Für alle diese Anwendungsgebiete werden substanzspezifische Hochleistungsmaterialien gesucht, wobei eine große Flexibilität in Anpassung an die speziellen Targets erforderlich ist. Vorzugsweise werden feste Materialien (Partikel, Filme) eingesetzt, um die Phasentrennung von festen und flüssigen Stoffströmen zu vereinfachen. Im Unterschied zu Trennverfahren, die auf unterschiedlichen physikalischen Eigenschaften beruhen, ist die chemische Affinität zum Träger die Voraussetzung für substanzspezifische Trennungen. Substanzspezifität kann durch biologische oder biomimetische Rezeptoren erzielt werden. Für Affinitätstrennungen werden bislang entweder spezifische, aber sehr empfindliche biologische Liganden (z.B. Antikörper, Enzyme) oder relativ unspezifische synthetische Liganden (z.B. Farbstoffe, Metallchelate) verwendet; Beispiele sind Chromatographie, Festphasenextraktion, Membrantrennung, Festphasenassays oder Sensoren (D. Sii, A. Sadana, J. Biotechnol. 19 (1991) 83).

Porenfreie Filme bzw. Schichten oder Partikel mit affinen Liganden an der Oberfläche besitzen eine beschränkte Bindungskapazität; bei porösen Materialien mit größerer spezifischer Oberfläche und Bindungskapazität treten typischerweise Einschränkungen der Bindungskapazität durch Diffusionslimitierungen auf. Gerichtet durchströmbare poröse Membranen sind deshalb besonders attraktive alternative Materialien. Etablierte Membranverfahren mit porösen Membranen wie Mikro- oder Ultrafiltration (MF oder UF) funktionieren nach dem Größenausschlußprinzip (W. Ho, K. Sirkar (Eds.), Membrane Handbook, van Nostrand Reinhold, New York, 1992). Die Trennung von Substanzen ähnlicher Molekülgröße mit porösen Membranen erfordert zusätzlich spezifische (Affinitäts-) Wechselwirkungen mit der Membran (E. Klein, Affinity Membranes, John Wiley & Sons, New York, 1991).

Die Hauptmotivation für die Anwendung von Affinitätsmembranen besteht in der Möglichkeit der gerichteten Anströmung trennspezifischer Gruppen (Liganden/Rezeptoren), die sich in großer Dichte in den Poren befinden. Damit wird eine drastische Verbesserung der Effektivität (geringerer Druckabfall, kürzere Verweilzeiten, höhere Durchsatzgeschwindigkeiten, kaum Diffusionslimitierung in Poren, schnellere Equilibrierung) im Vergleich zu analogen Prozessen mit Partikeln möglich (D. K. Roper, E. N. Lightfoot, J. Chromatogr. A 702 (1995) 3). Solche Affinitätsmembranen können für Stofftrennungen, vorzugsweise von Proteinen, aber auch vieler anderer Substanzen (z.B. Peptide, Nukleinsäurederivate, Kohlehydrate oder verschiedene Toxine, Herbizide, Pestizide) bis zu Zellen genutzt werden (US 5766908). Außerdem ergeben sich vielfältige Anwendungsmöglichkeiten in der Analytik, wie z.B. zur hochselektiven Probenanreicherung oder auch zur Dekontamination von Stoffströmen (DE 19609479).

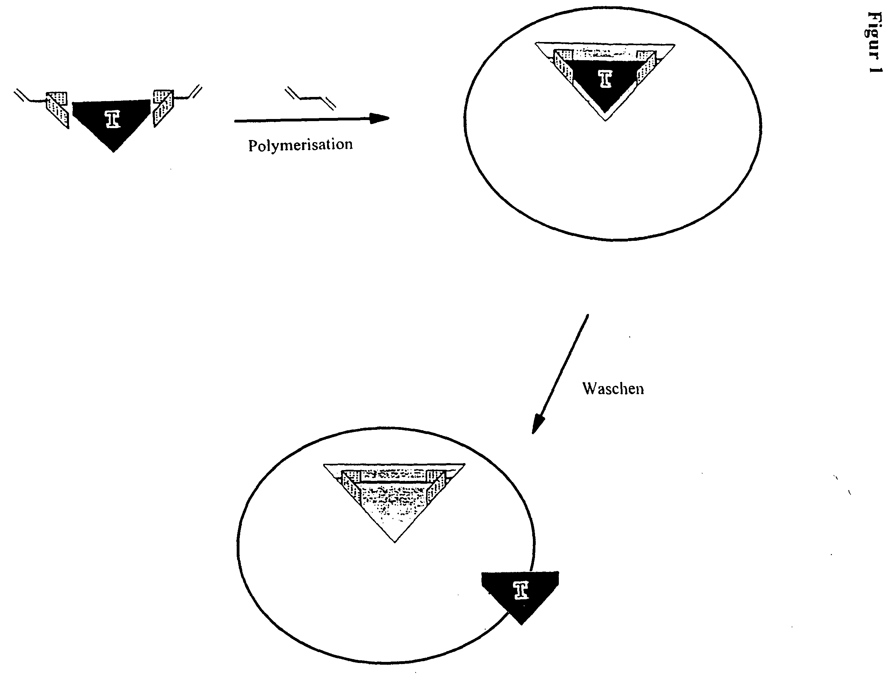

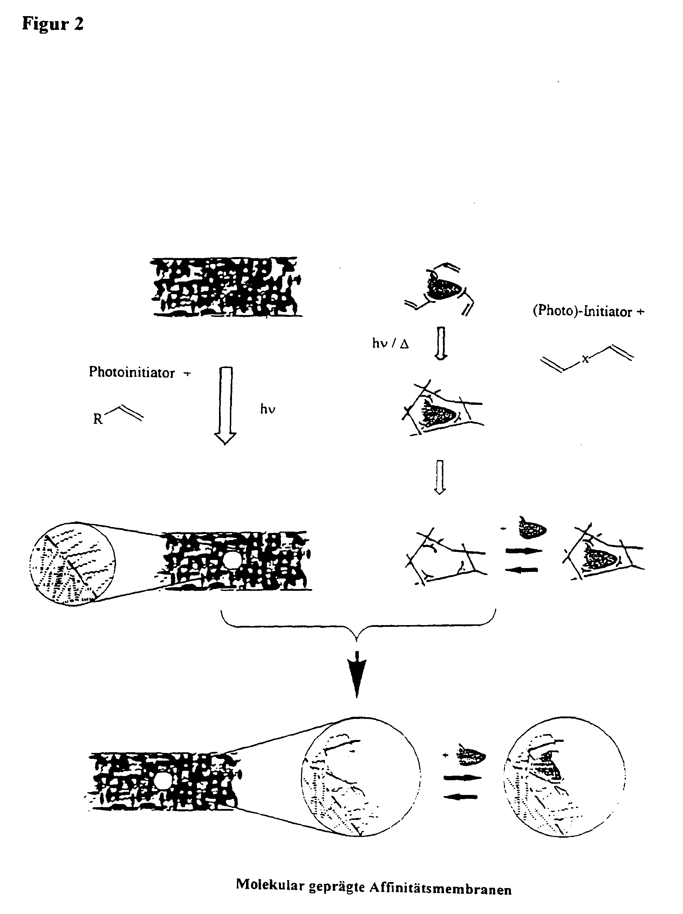

Eine sehr attraktive Alternative zu biologischen oder biomimetischen Affinitäts-Liganden/Rezeptoren, z.B. für Chromatographie oder Analytik, wurde in den letzten Jahren entwickelt. Dies ist die Nutzung von spezifischen, aber sehr robusten funktionellen Kavitäten ("molekularen Abdrücken") in synthetischen Polymeren, hergestellt durch molekular prägende Polymerisation (G. Wulff, Angew. Chem. 107 (1995) 1958; K. Mosbach, O. Ramström, Bio/Technology 14 (1996) 163; A.G. Mayes, K. Mosbach, Trends Anal. Chem. 16 (1997) 321). Dazu realisiert man eine Polymerisation von Monomeren in Gegenwart von Templatmolekülen (z.B. Protein, Nukleinsäure, niedermolekulare organische Substanz), die mit einem funktionellen Monomer einen während der Polymerisation relativ stabilen Komplex bilden können. Nach dem Auswaschen des Templates können die so hergestellten Materialien Templatmoleküle wieder spezifisch binden. Die so synthetisierten Polymere heißen Templat-geprägte Polymere (*TGP*) / molekular geprägte Polymere (MIP) oder "Fingerabdruck"-Polymere (s. Fig. 1, Fig. 2).

Auf diese Weise sind z.B. die Herstellung polymerer Sorbentien in Gegenwart kleiner organischer Moleküle (Patent US 5110833) bzw. makromolekularer Substanzen (US 5372719) oder die Synthese von Acrylamid- bzw. Agarosegelen in Gegenwart von Proteinen beschrieben worden (Patente US 5728296, US 5756717). Auch Peptid- bzw. Proteinspezifische Sorbentien, hergestellt durch "Oberflächenprägen" von Metallchelatstrukturen auf speziell funktionalisierte Partikeln, wurden beschrieben (US 5786428). In allen Fällen wurden hohe Affinitäten für die jeweiligen Template erhalten. Die Anwendung von durch molekulares Prägen hergestellten künstlichen Antikörpern und Rezeptoren hat sehr große Vorteile, weil diese Strukturen viel stabiler als ihre natürlichen Analoga sind. Außerdem können sie für jede Substanz (selbst für solche mit wenig ausgeprägten Antigen-Eigenschaften, wie z.B. kleine Moleküle oder Immunodepressiva) synthetisiert sowie wesentlich einfacher und kostengünstiger als die entsprechenden Biomoleküle hergestellt werden.

Die Auswahl der Komponenten für die Synthese eines *TGP* erfolgt vor allem aufgrund der Wechselwirkungen zwischen Templat und funktionellem Monomer. Mit dem Ziel, diese Wechselwirkungen möglichst effektiv und für Affinitätswechselwirkungen zugänglich zu "fixieren", werden zusätzlich geeignete Vernetzer und Lösungsmittel gewählt.

Jede Substanz mit definierter dreidimensionaler Gestalt (Form) kann als Templat für die Synthese von *TGP* genutzt werden. Substanzklassen reichen folglich von kleinen Molekülen mit Molekülmassen unter oder um 100 Da (z.B. Herbizide) bis zu Partikeln wie Viren, Bakterien oder Zellen. Allerdings sind Verbindungen mit biologischer Funktion wie Proteine, Peptide, Nukleinsäuren oder Kohlehydrate von besonders großem Interesse. Die Erkennung von Templaten durch *TGP* basiert auf der Kombination verschiedener Faktoren wie reversibler kovalenter oder nichtkovalenter Bindung, elektrostatischer und hydrophober Wechselwirkungen sowie der Komplementarität der Gestalt (Form). Welcher dieser Faktoren dominiert, ist von der Polymerstruktur, den Templateigenschaften sowie den Bindungsbedingungen abhängig. Z.B. sind in hydrophoben Lösungsmitteln oft elektrostatische Wechselwirkungen für die Templaterkennung durch *TGP* dominierend. Dagegen sind in polaren Lösungsmitteln hydrophobe Wechselwirkung sowie die Gestaltspezifität am wichtigsten für die Templaterkennung. Vorzugsweise sollten *TGP* unter Bedingungen synthetisiert werden, die starke, aber reversible Wechselwirkungen zwischen dem Polymer und dem Templat favorisieren. Für große Moleküle (100...100000 Da) kann dagegen auch eine Kombination von vielen schwächeren Bindungen unter Einbeziehung von Wasserstoffbrücken und hydrophobe Wechselwirkungen günstig sein. Für kleine Moleküle (50...100 Da) sind wenige starke Wechselwirkungen wie z.B. ionische Bindungen notwendig, um *TGP* mit hoher Affinität zu erhalten.

Wasser als Lösungsmittel oder wäßrige Systeme generell sind natürlich im Zusammenhang mit den o.g. Anwendungen von besonderem Interesse. Von der Natur "optimierte" Ligand/Rezeptor-Systeme funktionieren unter diesen Bedingungen optimal. In der Synthese von *TGP* für Anwendungen in wäßrigen Systemen gibt es dagegen erst in jüngster Zeit erste Fortschritte (L. Andersson, Anal. Chem. 68 (1996) 111; S. Hjerten, J. L. Liao, K. Nakazato, Y. Wang, G. Zamaratskaia, H. X. Zhang, Chromatographia 44 (1997) 227). Besondere Probleme bereiten Synthesen von *TGP*-Rezeptoren für kleinere Moleküle. Offensichtlich ist es bislang in solchen Versuchen nur unvollkommen gelungen, neben der Wahl geeigneter Wechselwirkungskräfte auch die detailgetreue Anordnung der funktionellen Gruppen zu steuern.

Der Erfindung liegen die Aufgabe zugrunde, den bekannten Stand durch ein verbessertes Verfahren zur Herstellung Templat-geprägter Materialien zu verbessern. Die Aufgabe wird durch ein Verfahren gemäß Anspruch 1 gelost.

Die vorliegende Erfindung umfaßt ein allgemeines Polymerisationsverfahren; in prinzipiell bekannter Weise ist unter den speziellen erfindungsgemäßen Bedingungen (s.u.) auch die Synthese von *TGP*-Partikeln möglich. Da diese Partikel aber aufgrund der bevorzugten wasserlöslichen Monomere und wäßrigen Bedingungen (s.u.) mehr oder wenig starken Hydrogelcharakter aufweisen, erfolgt vorzugsweise die Synthese dünner *TGP*-Schichten auf festen, vorzugsweise polymeren, Trägem. Dieses Oberflächenprägen führt durch eine selektiv an der Trägeroberfläche initiierte, kontrollierte vernetzende Polymerisation in Gegenwart von Templatmolekülen zu kovalent fixierten, dünnen Schichten mit Templatabdrücken auf der gesamten Trägeroberfläche, beispielsweise einer Membran (TGM). Aufgrund der Selektivität der Initiierung bleiben Matrix- bzw. Porenstruktur intakt. Somit kann eine unabhängige Optimierung von Porenstruktur (Kapazität, Permeabilität) und Oberflächenfunktionalität (Spezifität durch Templatabdrücke) durch ein spezielles Herstellungsverfahren erreicht werden. Mögliche Template sind z.B. kleine Moleküle mit Molekülmassen unter oder um 100 Da (u.a. Herbizide), größere Moleküle wie Peptide, Proteine, Nukleinsäuren oder Kohlehydrate, oder auch Partikel wie Viren, Bakterien oder Zellen. Bei der Filtration durch oder der Applikation auf *TGP* können die Template oder Templatderivate auch aus verdünnten Lösungen in den Templatabdrücken (funktionellen Kavitäten) mit hoher Spezifität gebunden werden. Dann können die Template oder Templatderivate ggf. gereinigt und anschließend entweder unter Filtrationsbedingungen (als Konzentrat) eluiert oder direkt auf dem Träger nachgewiesen werden. Polymere Membranen können durch Verfahren wie Fällungsmittel- oder Temperaturinduzierte Phaseninversion in einer Vielzahl von Porenstrukturen sowie mit den gewünschten mechanischen etc. Eigenschaften hergestellt werden. Damit ist eine Auswahl optimaler poröser Matrixmembranen für die gewünschten Trennprozesse möglich (E. Klein, Affinity Membranes, John Wiley & Sons, New York, 1991).

Die Auswahl der Komponenten für ein Templat-spezifisches *TGP* erfolgt vor allem aufgrund der Wechselwirkungen zwischen Templat (*T*) und funktionellem Monomer (*FM*). Mit dem Ziel, diese Wechselwirkungen möglichst effektiv und für Affinitätswechselwirkungen zugänglich zu "fixieren", werden geeignete Vernetzer (*V*) und Lösungsmittel (*LM*) gewählt. Die Synthese der TGP-Schichten erfolgt dann *in situ* durch reaktive Beschichtung der gesamten Trägeroberfläche, z.B. Membran, aus einem Reaktionsgemisch niedriger Viskosität, aber unter Erhalt des Komplexes aus *T* und *FM.* Diese Funktionalisierung der Membran mit *TGP* erfolgt derart, daß sowohl die Porenstruktur als auch die Stabilität der Matrixmembran nicht beeinträchtigt werden, daß aber auch eine Blockierung der (transmembranen) Poren minimiert wird.

Um diese Anforderungen zu erfüllen, wird eine photochemische Initiierung einer heterogenen Pfropfcopolymerisation (z.B. funktioneller Acrylate) zur *TGP*-Synthese angewandt. Dafür resultiert folgender prinzipieller Ablauf der Funktionalisierung:

1. Beschichtung des Trägers mit Photoinitiator (*PhI*)
2. Equilibrieren des Trägers mit dem Reaktionsgemisch (*T, FM, V, LM, PhI*), im Falle von Membranen: Füllen und Equilibrieren des Porenvolumens der Matrixmemban mit dem Reaktionsgemisch,
3. UV-Belichtung: selektive Anregung des *PhI,* Erzeugung von Startradikalen durch H-Abspaltung an der Oberfläche des Trägers, Polymerisation (vorzugsweise Temperatur, T ≤ 25°C),
4. Extraktion von unumgesetzten Reaktanden, löslichem Homopolymer und *T*.

Diese Funktionalisierungen basieren auf der Wirkung des Trägermaterials als Coinitiator, d.h. alle Polymere, aus denen sich photoinitiiert Radikale durch H-Abspaltung generieren lassen, die eine Pfropfcopolymerisation starten können, lassen sich auf diese Weise modifizieren. Die *TGP*-Funktionalisierungen sind aus wäßrigen oder organischen Lösungsmitteln möglich. Über Initiierungs- und Polymerisationsbedingungen lassen sich Funktionalisierungsgrad und damit Oberflächenbedeckung der Matrix steuern. Falls erforderlich, kann so auch eine Blockierung der Matrixmembranporen im Falle von *TGM* minimiert werden. Damit ist die Anwendung des für die *TGP*-Synthese etablierten Methodenarsenals auf die Oberflächenfunktionalisierung von Trägermaterialien möglich.

Für die Photofunktionalisierung wurde ein bisher noch nicht bekanntes Zusammenspiel zwischen Adsorption des *PhI* und des T an der (Membran)Polymeroberfläche sowie den Polymerisationsbedingungen beobachtet. Von einem hydrophilen Polymer (z.B. Nylon) kann ein adsorbierter hydrophober *PhI* (z.B. Benzophenon) durch ein hydrophiles T (z.B. Terbumeton) verdrängt werden; die Photofunktionalisierung wird dadurch unterdrückt. Ein solches System ist zur *TGP*-Synthese nicht geeignet. Ein hydrophiler *PhI* (z.B. Benzophenoncarbonsäure)

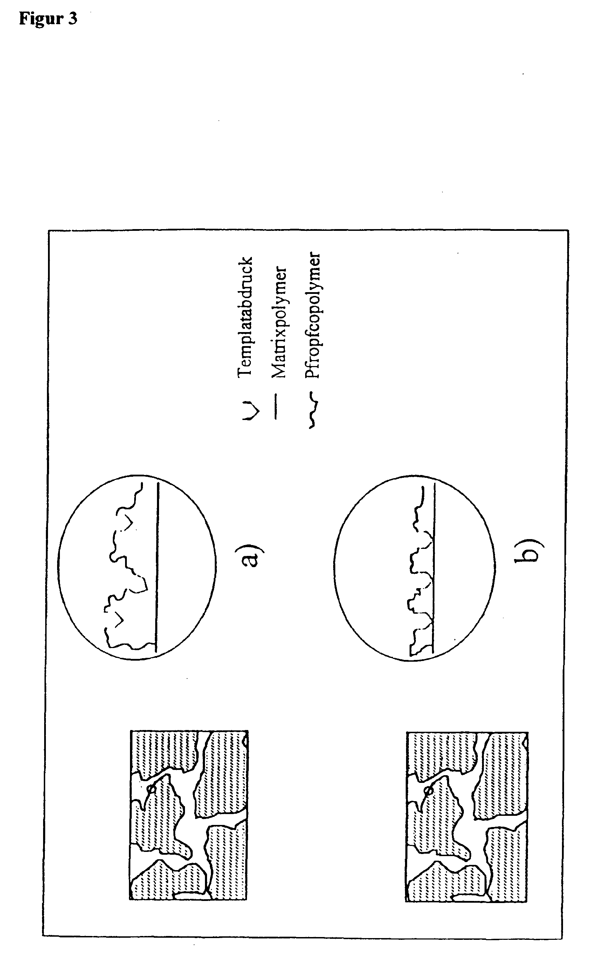

dagegen coadsorbiert mit dem hydrophilen *T* am hydrophilen Polymer; die Photofunktionalisierung ist dadurch hinreichend effektiv; das T bindet spezifisch an dem so synthetisierten *TGP.* Ein hydrophober *PhI* (z.B. Benzophenon) adsorbiert bevorzugt an einem hydrophoben Polymer (z.B. Polypropylen); die Photofunktionalisierung ist effektiv; für ein hydrophileres T (z.B. Terbumeton) dominieren die Bindungen zu Templatabdrücken im Pfropfcopolymer. Daraus können unterschiedliche *TGP*-Strukturtypen abgeleitet werden (s. Fig. 3):

a) Templatabdrücke innerhalb oder/und an der Oberfläche einer vernetzten Pfropfcopolymerschicht, die an der Trägeroberfläche fixiert ist,
b) Templatabdrücke direkt an der Trägeroberfläche unter Beteiligung des Matrixpolymers.

*Template.* Geeignete Substanzklassen reichen von kleinen Molekülen mit Molekülmassen unter oder um 100 Da (z.B. Herbizide) bis zu Partikeln wie Viren, Bakterien oder Zellen. Die Templatkonzentrationen in der Monomermischung für die *TGP*-Herstellung betragen zwischen 0,01 und 50 %. Mit der vorliegenden Erfindung können auch in wäßrigen Systemen ionische und elektrostatische Wechselwirkungen sowie Wasserstoffbrückenbindungen zur Synthese von *TGP* und somit zur molekularen Erkennung genutzt werden. Hydrophobe Wechselwirkungen können einen zusätzlichen Beitrag liefern. Dies ergibt insbesondere für kleine Moleküle signifikante Verbesserungen und ist auch für biologisch relevante Moleküle wie z.B. Aminosäuren, Peptide, Nucleinsäuren, Oligonucleotide, Zucker sowie Oligosaccharide, aber auch für Proteine oder DNA und RNA nutzbar.

*Funktionelle Monomere* mit positiv oder negativ geladenen funktionellen Gruppen (z.B. Aminoethylacrylat-Derivate oder Acrylsäure bzw. Methacrylsäure) sind für die *TGP*-Synthese geeignet. Zusätzlich können hydrophobe Einheiten wie z.B. aromatische Ringe, Kryptanden oder Cyclodextrine in *TGP* eingebaut werden. Auch zur Komplexbildung befähigte Monomere wie Metallchelatkomplexe, Schiff'sche Basen und spezielle Ester können für die Herstellung von *TGP* genutzt werden. Auch Anilin und -derivate mit weiteren funktionellen Gruppen können für die *TGP*-Synthese genutzt werden. Weiterhin sind z.B. auch Derivate der Phenylboronsäure, die mit Diolen Ester bilden können, als funktionelle Monomere geeignet. Die Konzentration funktioneller Monomere in der Mischung kann zwischen 0 und 100% betragen. Die Lösungsmittel für die Polymerherstellung können das Monomer selbst, Wasser (Puffer), organische Lösungsmittel oder deren Mischungen sein. Generell hängt der optimale Monomertyp für *TGP* von der Templatstruktur sowie den Polymerisationsbedingungen ab. In Abhängigkeit von den Polymerisationsbedingungen sowie der Zusammensetzung können die geprägten Polymere in der gewünschten Dichte, Porosität, Vernetzungsdichte und Konsistenz hergestellt werden. Beispiele für Vernetzer sind Ethylenglycolbismethacrylat für funktionelle Acrylate, N,N-Methylenbisacrylamid oder Piperazinbisacrylamid für Acrylamid. Die Vernetzerkonzentrationen in der Monomermischung betragen bis zu 80%.

Um das Templat wieder aus dem *TGP* herauszuwaschen, können z.B. eine Säure, die die elektrostatischen Wechselwirkungen stört, eine Salzlösung mit einer zur Dissoziation ausreichenden Ionenstärke oder ein Lösungsmittel mit anderer Polarität verwendet werden. Dadurch werden in den Poren oder/und an der Oberfläche des Polymers die zur Templatstruktur komplementären Bindungsstellen wieder freigesetzt. Allerdings sind auch Anwendungen von *TGP* mit gebundenem Templat möglich.

Durch Wahl der Funktionalisierungsstrategie bzw. -bedingungen können neben einer optimalen Spezifität der Templatabdrücke auch die unspezifischen Wechselwirkungen von strukturell ähnlichen oder verschiedenen Substanzen mit dem *TGP* minimiert werden. Beispiele dafür sind die Optimierung des funktionellen Monomers und/oder des Vernetzers, Zusätze im Reaktionsgemisch (z.B. von hydrophilen Monomeren), Mehrschritt-Modifizierungen oder nachträgliche Derivatisierungen. Damit wird die Selektivität der *TGP* erhöht.

Die Strukturcharakterisierung der *TGP* erfolgt in prinzipiell bekannter Weise mit etablierten Verfahren, z.B. durch REM-Untersuchungen (REM - Raster-Elektronen-Mikroskop), FTIR-ATR-Spektroskopie (Fourier Transform Infrared - Attenuation of Total Reflexion; Infrarotspektroskopie mit Abschwächung der Totalreflexion), Funktionalgruppenanalytik mit photometrischen oder fluorimetrischen Methoden, Kontaktwinkelmessungen, Permeabilitätsmessungen sowie statische und dynamische Sorptionsexperimente mit dem Templat oder anderen strukturell ähnlichen bzw. verschiedenen Substanzen. Insbesondere die statischen und dynamischen Bindungskapazitäten der *TGP* für das Templat, in Abhängigkeit von *TGP*-Struktur und den Testbedingungen (Konzentration, Verweilzeit, applizierte Stoffmengen und Volumen, Spülbedingungen usw.) sind wesentlich im Hinblick auf die vielfältigen Anwendungen der *TGP.*

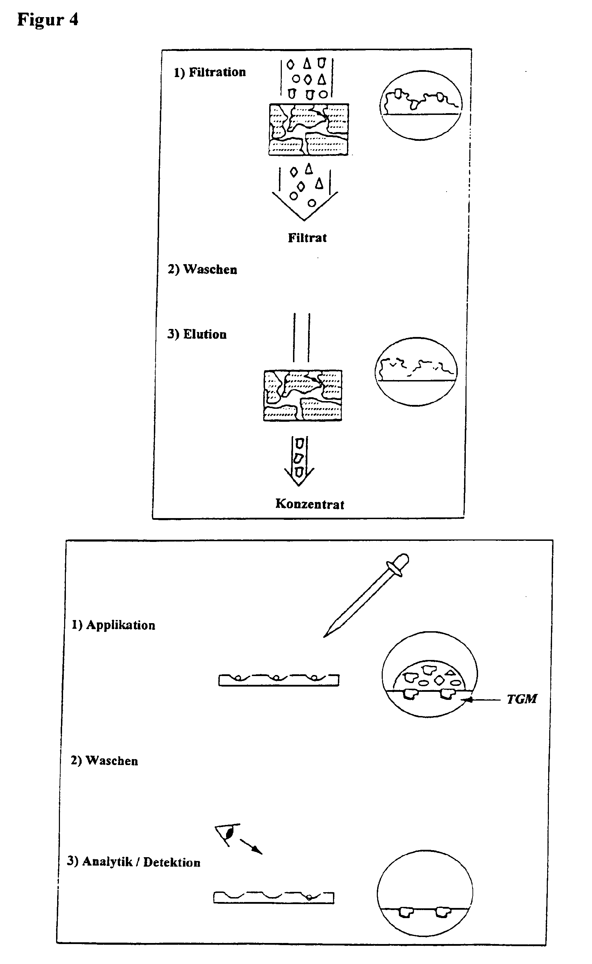

Template oder Templatderivate werden bei der Filtration durch oder der Applikation auf *TGP,* auch aus hoher Verdünnung, in den Templatabdrücken mit hoher Spezifität gebunden. Dann können die Template oder Templatderivate ggf. gereinigt und anschließend entweder unter Filtrationsbedingungen (als Konzentrat) eluiert oder direkt auf dem Träger nachgewiesen werden (s. Fig. 4).

Folgende Anwendungen ergeben sich für die erfindungsgemäß erhaltenen TGP, ohne daß damit die Anwendungsmöglichkeiten auf die konkreten Fälle beschränkt werden soll:

1. Filtration (Perfusion) von Lösungen, aber auch gasförmige Gemischen, durch *TGP,*
2. Diffusion (Dialyse) oder Elektrodiffusion (-dialyse) durch *TGP,*
3. Anwendung von *TGP* in Festphasenextraktion, (Membran-)Chromatographie oder Elektrophorese,
4. Anwendung von *TGP* in Sensoren,
5. Anwendung von *TGP* als Katalysator,
6. Applikation von Lösungen, aber auch gasförmigen Gemischen, auf *TGP*; Beispiele Teststreifen, Blottingmembranen, Assays, Drugscreening.

Mit den synthetisierten *TGP* ist z.B. die effiziente und spezifische Aufkonzentrierung von Schadstoffen (Herbiziden) aus verdünnten Lösungen möglich (vgl. 1.). Das kann einerseits dazu genutzt werden, solche Substanzen quantitativ zu eliminieren (Detoxifikation); andererseits ist aber auch eine definierte Anreicherung (analog zur Festphasenextraktion; vgl. 3.) für die folgende Spurenanalytik möglich. Z.B. die effiziente Hochreinigung von Proteinen, ein Prozeß von höchster Relevanz für die Biotechnologie, ist mit *TGP* ebenfalls möglich (vgl. 1). Auch dabei sind, in Abhängigkeit von Protein und Prozeß, sowohl die Analytik, eine Herstellung in reiner Form, als auch eine Dekontamination möglich.

Der bekannte Stand läßt sich erfindungsgemäß durch neuartige *TGP* verbessern, die aus wäßrigen Reaktionsmischungen synthetisiert werden und unter wäßrigen Bedingungen, insbesondere in Gegenwart von Puffersalzen, auch hohe Spezifitäten aufweisen.

Ein *Komplex zwischen Templat und funktionellem Monomer,* der im wesentlichen auf ionischen Bindungen basiert, kann leicht durch erhöhte Salzkonzentration gespalten werden. Dieser Effekt kann zum einen für die Elution des Templates aus dem *TGP* genutzt werden, schränkt aber zum anderen die Anwendbarkeit für Affinitätstrennungen, mit Ausnahme von wäßrigen Lösungen niedriger Ionenstärke, sehr stark ein.

Überraschenderweise führt nun der Zusatz von Salz (z.B. Puffer) während der Polymerisation zu *TGP,* die eine hohe Affinität für Templatmoleküle bei ähnlich hoher Salzkonzentration (z.B. des Puffers unter den bevorzugten Anwendungsbedingungen) haben. Dieser Effekt kann phänomenologisch derart beschrieben werden, daß die Salzkonzentration in der Reaktionsmischung den Abstand der Funktionalgruppen, die an der Ionenaustauschwechselwirkung beteiligt sind, "einstellt". Im Verlauf der Synthese gelingt es offensichtlich, diese vorteilhafte Konstellation zu fixieren (synthetischer Rezeptor mit ionischen Funktionalgruppen im richtigen Abstand). Besonders effektiv läßt sich diese Verfahrensweise bei Oberflächenfunktionalisierungen fester Träger realisieren, die im folgenden beschrieben wird.

Durch Wahl der Funktionalisierungsstrategie bzw. -bedingungen können neben einer optimalen Spezifität der Templatabdrücke auch die unspezifischen Wechselwirkungen von strukturell ähnlichen oder verschiedenen Substanzen mit dem *TGP* minimiert werden. Beispiele dafür sind die Optimierung des funktionellen Monomers und/oder des Vernetzers, Zusätze im Reaktionsgemisch (z.B. von hydrophilen Monomeren), Mehrschritt-Modifizierungen oder nachträgliche Derivatisierungen. Damit wird die Selektivität der *TGP* erhöht.

Die erfindungsgemäß hergestellten Templat-geprägten Materialien bestehen aus Templat-geprägten Polymeren (TGP), die durch Modifizierung der Oberfläche von festen Trägern in wäßrigen oder organischen Reaktionslösungen erhalten werden und die auf dem Wege einer an der Trägeroberfläche photochemisch initiierten vernetzenden Polymerisation funktioneller Monomere in Gegenwart eines Templates zu stabilen Templatabdrücken führt. Anschließend können die Templatabdrücke Templatmoleküle oder Templatderivate auch aus wäßrigen, salzhaltigen Lösungen spezifisch binden.

Die erfindungsgemäß hergestellten Templat-geprägten Membranen (TGM) werden durch Modifizierung der Oberfläche von Membranen erhalten, die auf dem Wege einer an der Membranoberfläche photochemisch initiierten vernetzenden Polymerisation funktioneller Monomere in Gegenwart eines Templates zu stabilen Rezeptorstrukturen in Form von Templatabdrücken führt, die anschließend Templatmoleküle oder Templatderivate spezifisch binden können. Ein Vorteil des erfindungsgemäßen Verfahrens zur Herstellung Templat-geprägter Materialien besteht darin, daß ausgehend von einer porösen Membran unter Erhalt der makropösen Struktur und spezifischen Oberfläche synthetisiert wird und sowohl eine große Templat-Bindungskapazität als auch eine hohe Permeabilität der Templat-geprägten Membran erzielt werden. Die Synthese der Templatabdrücke erfolgt durch eine heterogene photo initiierte vernetzende Pfropfcopolymerisation funktioneller Monomere auf der Trägeroberfläche.

Bei der erfindungsgemäßen Herstellung Templat-geprägter Materialien werden eine Substanz vom H-Abstraktionstyp (Anlagerung eines Wasserstoffatoms aus der Umgebung) als Photoinitiator und das Trägerpolymer als Coinitiator eingesetzt, wobei die Initiierung durch Lichtanregung des Photoinitiators erfolgt.

Die Synthese der Templatabdrücken beruht auf einer photochemisch initiierten vernetzenden Polymerisation funktioneller Monomere auf der Trägeroberfläche. Als Initiator wird eine Substanz eingesetzt, die nach photochemischer Anregung unter H-Abspaltung aus dem Träger Radikale für eine Polymerisation erzeugt.

Als Trägermaterialien dienen organische Polymere wie z.B. Polypropylen, Polyethylen, Polystyren, Polysulfon, Polyamide, Polyester, Polycarbonat, Polyacrylnitril, Polyvinylidenfluorid, Polyacrylate, Polyacrylamide, Cellulose, Amylose, Agarose sowie deren jeweilige Derivate, Copolymere oder Blends der Polymeren.

Als Trägermaterialien werden ferner poröse Festkörper wie z.B. Gläser, Silikate, bzw. deren Komposite, auch mit organischen Polymeren, eingesetzt.

Die Membranen weisen vorzugsweise symmetrische, aber auch asymmetrische Porenstrukturen und Porengrößen zwischen wenigen nm und 10 μm, bevorzugt 100 nm bis 5 μm auf.

Als Template dienen kleine Moleküle mit Molekülmassen unter oder um 100 Da, wie z.B. Herbizide, Wirkstoffe oder Aminosäuren, größere Moleküle wie Peptide, Proteine, Nukleinsäuren oder Kohlehydrate, oder auch Partikel wie Viren, Bakterien oder Zellen und als funktionelle Monomere polymerisationsfähige Verbindungen mit zur Wechselwirkung mit Templaten befähigten Gruppen, insbesondere Carboxyl-, Sulfonyl-, Sulfat-, Phosphat-, Amino- oder quartären Ammonium-Gruppen sowie jeweils deren Derivate, auch im Gemisch.

Durch eine nachträgliche oder vorherige zusätzliche Funktionalisierung oder Beschichtung wird die unspezifische Bindung von mit Templat konkurrierenden Substanzen und Nicht-Templaten verringert.

In einer besonderen Ausgestaltung des erfindungsgemäßen Verfahrens werden im Gemisch mit den funktionellen Monomeren auch Vernetzermonomere sowie Lösungsmittel für alle Komponenten des Reaktionsgemisches eingesetzt.

Bei der Herstellung Templat-geprägter Polymere (TGP) läßt sich durch den Zusatz von Salz die Bindungsspezifität und -kapazität des Templat-geprägten Polymers für das Templat sowie Templat-ähnliche Substanzen erhöhen, wobei als Träger Filme, Membranen, Fasern, Hohlfasern, Gewebe, Vliese oder Partikel, jeweils nichtporös oder porös, verwendet werden, jedoch das Templat-geprägte Polymer auch trägerfrei in beliebiger Gestalt und Größe hergestellt ist. Die Verwendung der erfindungsgemäß erhaltenen Templat-geprägten Materialien liegt in der Stofftrennung und/oder Analytik von flüssigen oder gasförmigen Stoffgemischen, die auf der spezifischen Bindung der Template oder Templatderivate bei der Perfusion oder Diffusion durch Templat-geprägte Polymere oder der Applikation auf Templat-geprägten Polymeren basieren, ferner in der substanzspezifischen Stofftrennung mittels

- Affinitätsfiltration durch eine Anordnung mit Templat-geprägtem Polymer zur Aufkonzentrierung, Reinigung, Abtrennung oder analytischen Bestimmung von Substanzen,

- Dialyse oder Elektrodialyse durch ein Templat-geprägtes Material zur Aufkonzentrierung, Reinigung, Abtrennung oder analytischen Bestimmung von Substanzen,

- Festphasenextraktion, Chromatographie, Membranchromatographie oder Elektrophorese mit einem Templat-geprägten Polymer zur Aufkonzentrierung, Reinigung, Abtrennung oder analytischen Bestimmung von Substanzen,

- eines Templat-geprägten Polymers als Sensor oder Katalysator zur Reinigung, Abtrennung oder analytischen Bestimmung von Substanzen sowie

- eines Templat-geprägten Polymers als Blottingmembran oder Teststreifen oder Material für Assays oder zum Wirkstoff-Screening.

Die Erfindung macht Gebrauch von bekannten (Membranen, Polymere) und neuen Elementen (Modifizierung der gesamten Oberfläche von Membranen mit Templat-geprägten Polymerschichten, Synthese dünner *TGP*-Schichten auf festen Trägem), die sich gegenseitig beeinflussen und in ihrer neuen Gesamtwirkung einen Gebrauchsvorteil und den erstrebten Erfolg ergeben, der darin liegt, daß nunmehr mit den synthetisierten *TGP* z.B. die spezifische Aufkonzentrierung von Schadstoffen aus verdünnten Lösungen (Bereicherung der Spurenanalytik) sowie z.B. die effiziente Hochreinigung von Proteinen - ein Prozeß von höchster Relevanz für die Biotechnologie - möglich ist und die *TGP*-Synthese in wäßrigen Systemen mit hoher Templat-Spezifität sowie die Anwendbarkeit der *TGP*-Synthese auf Oberflächen fester Formkörper als Träger gelingt.

Die Erfindung soll anhand von Ausführungsbeispielen näher erläutert werden, ohne auf diese Beispiele beschränkt zu sein.

**Ausführungsbeispiele**

*Beispiel 1. Für das Herbizid Terbumeton (2-t-Butylamino-4-ethyl-6-methoxy-1,3,5-triazin) molekular geprägte Polypropylenmembran*

Eine Probe (6 cm$^2$) einer PP-MF-Membran (2E HF, Akzo Nobel, Wuppertal) wird mit Chlorofom extrahiert, getrocknet und gewogen; anschließend wird die Membran in einer Petrischale (d = 10 cm) mit 10 ml Reaktionslösung bestehend aus 5 mM Terbumeton (Templat), 25 mM Acrylsäure (funktionelles Monomer), 600 mM Ethylenglycolbismethacrylat (Vernetzer) und 5 mM Benzophenon (Photoinitiator) in Chloroform getränkt und überschichtet. Die Petrischale wird mit einer Glasplatte (Tief-UV-Filter, 1 ≥ 310 nm) abgedeckt. Nach 30 min erfolgt die Belichtung bei Halblast an einem UV-Trockner (Beltron GmbH) für insgesamt 9 min (9 Passagen durch Belichtungszone). Anschließend wird die Membran dreimal mit Chloroform/Essigsäure (98/2, v/v) sowie dreimal mit Chloroform extrahiert. Danach wird getrocknet und gravimetrisch der Modifizierungsgrad, TGP pro äußere Membranfläche, bestimmt: DG = 3,3 $\mu$g/cm$^2$.
Eine nicht molekular geprägte Kontrollprobe wird nach analoger Vorschrift, aber ohne Templat, präpariert; der Modifizierungsgrad (Polymer pro äußere Membranfläche) beträgt: DG = 2,0 $\mu$g/cm$^2$.

*Beispiel 2. Für das Herbizid Terbumeton (2-t-Butylamino-4-ethyl-6-methoxy-1,3,5-triazin) molekular geprägte Nylonmembran*

Eine Probe (6 cm$^2$) einer Ny-MF-Membran (2D, Akzo Nobel, Wuppertal) wird mit Chloroform extrahiert, getrocknet und gewogen; anschließend wird die Membran in einer Petrischale (d = 10 cm) mit 10 ml Reaktionslösung bestehend aus 1 mM Terbumeton (Templat), 5 mM Acrylsäure (funktionelles Monomer), 120 mM Ethylenglycolbismethacrylat (Vernetzer) und 1 mM Benzophenon-4-carbonsäure (Photoinitiator) in Chloroform getränkt und überschichtet. Die Petrischale wird mit einer Glasplatte (Tief-UV-Filter, 1 ≥ 310 nm) abgedeckt. Nach 30 min erfolgt die Belichtung bei Halblast an einem UV-Trockner (Beltron GmbH) für insgesamt 9 min (9 Passagen durch Belichtungszone). Anschließend wird die Membran dreimal mit Chloroform/Essigsäure (98/2, v/v) sowie dreimal mit Chloroform extrahiert. Danach wird getrocknet und gravimetrisch der Modifizierungsgrad (TGP pro äußere Membranfläche) bestimmt: DG = 24,2 $\mu$g/cm$^2$.
Eine nicht molekular geprägte Kontrollprobe wird nach analoger Vorschrift, aber ohne Templat, präpariert, der Modifizierungsgrad (Polymer pro äußere Membranfläche) beträgt:

$$DG = 30,0 \ \mu g/cm^2.$$

Weitere Ergebnisse für variierte Präparationsbedingungen zeigt Tabelle 1.

Tabelle 1: Präparationsbedingungen und Ergebnisse für das Herbizid Terbumeton geprägte Polypropylenmembranen (PP) und Nylonmembranen (PA) Initiator: 1 mM Benzophenon; * 1 mM Benzophenon-4-carbonsäure

| Membran | Terbumeton (mM) | AA (mM) | EDMA (mM) | DG ($\mu$g/cm$^2$) |
|---|---|---|---|---|
| PP-MIP1 PP-K1 | 0,2 | 1 | 24 | 0 0 |
| PP-MIP2 PP-K2 | 1 | 5 | 120 | 2,0 3,3 |
| PP-MIP3 PP-K3 | 5 | 25 | 600 | 7,5 7,7 |
| PP-MIP4* PP-K4* | 1 | 5 | 120 | 0 3,3 |
| PA-MIP1 PA-K1 | 0,2 | 1 | 24 | 0 13,2 |
| PA-MIP2 PA-K2 | 1 | 5 | 120 | 1,7 17,6 |

(fortgesetzt)

| Membran | Terbumeton (mM) | AA (mM) | EDMA (mM) | DG ($\mu$g/cm$^2$) |
|---|---|---|---|---|
| PA-MIP3<br>PA-K3 | 5 | 25 | 600 | 0<br>0 |
| PA-MIP4*<br>PA-K4* | 1 | 5 | 120 | 24,2<br>30,8 |
| MIP molekular geprägte Membran,<br>K nicht molekular geprägte Membran (Kontrolle),<br>AA Acrylsäure,<br>EDMA Ethylenglycolbismethacrylat,<br>DG Modifizierungsgrad | | | | |

*Beispiel 3. Anwendung einer für Terbumeton molekular geprägten Polypropylenmembran zur Anreicherung von Herbiziden (Festphasenextraktion)*

Eine Probe (4,9 cm$^2$) einer entsprechend Beispiel 1 modifizierten Membran wird in einen Filterhalter aus Stahl mit Luer-Lock-Anschluß (Schleicher & Schuell, Dassel) montiert. 10 ml einer Lösung des Herbizids (Terbumeton, Terbutryn, Desmetryn oder Terbutylazin) mit einer Konzentration im Bereich von 10$^{-7}$ bis 10$^{-5}$ M in Wasser werden aus einer Spritze mit einer Geschwindigkeit von 10 ml/min quantitativ durch die Membran filtriert. Anschließend werden das Filtrat sowie 10 ml der Rohlösung mit jeweils 10 ml Chloroform extrahiert; die Herbizidkonzentrationen werden dann mit Hilfe der Gaschromatographie (Trennsäule HP5MS; Hewlet Packard GC System HP 6890 mit Masse-selektivem Detektor HP 5973) quantitativ bestimmt und auf diese Weise die in der Membran gebundene Menge ermittelt.

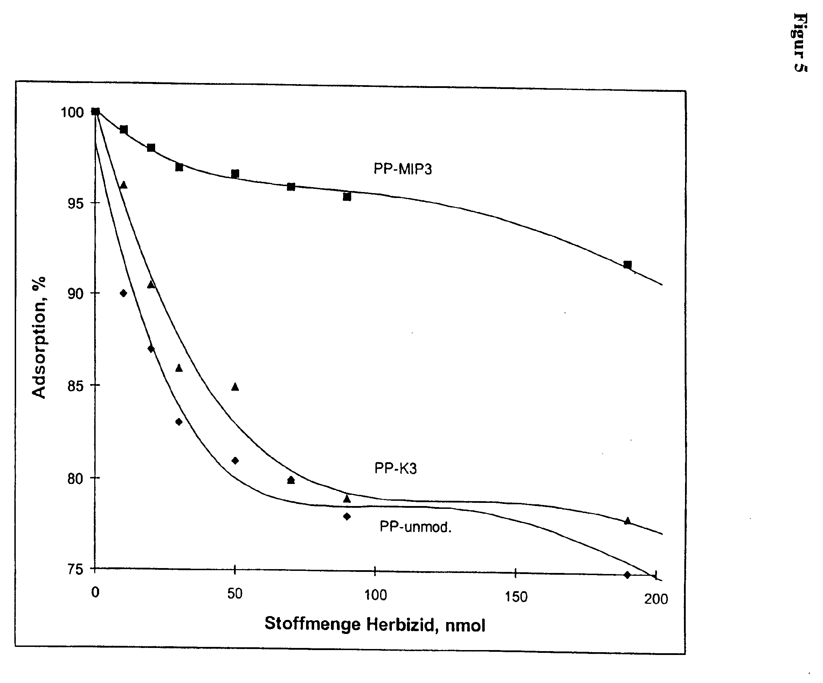

Repräsentative Ergebnisse für PP-MIP, PP-Kontrolle und PP-unmod, sowie 5*10$^{-7}$ M Herbizid in Wasser zeigen Fig. 5 und Tabelle 2.

Tabelle 2: Adsorptionskapazität einer molekular geprägten PP-Membran (10 ml Herbizid-Lösung; Konzentration 10$^{-5}$ M; Membranfläche 5 cm$^2$)

| Membran | Adsorption | | | | | | | |
|---|---|---|---|---|---|---|---|---|
| | Terbumeton | | Terbutylazin | | Desmetryn | | Terbutryn | |
| | % | nmol/cm$^2$ | % | nmol/cm$^2$ | % | nmol/cm$^2$ | % | nmol/cm$^2$ |
| PP | 78 | 15,6 | 95 | 19,0 | 39 | 7,8 | 98 | 19,6 |
| PP-K3 | 79 | 15,8 | 95 | 19,0 | 42 | 8,4 | 71 | 14,2 |
| PP-MIP3 | 96 | 19,2 | 76 | 15,2 | 63 | 12,6 | 100 | 20,0 |
| PP unmodifizierte Membran,<br>PP-K3 ohne Anwesenheit von Templat modifizierte Membran,<br>PP-MIP3 molekular geprägte Membran (*T*: Terbumeton) | | | | | | | | |

*Beispiel* 4. *Für das Herbizid Desmetryn (2-Isopropylamino-4-methylamino-6-methylthio-1,3,5-triazin) molekular geprägte Polypropylenmembranen*

Eine runde Probe (46 cm$^2$) einer PP-MF-Membran (nominale Porengröße, d = 0.2 $\mu$m; 2E HF, Akzo Nobel, oder d = 0.6 $\mu$m; AN 06, Millipore) wird mit Chloroform und Methanol extrahiert, getrocknet und gewogen. Danach wird die Membran für 30 min in eine 100 mM Lösung von BP (Photoinitiator) in Methanol getaucht. Anschließend wird die Membran, deren Poren noch mit der BP-Lösung gefüllt sind, in einer Petrischale (d = 10 cm) mit 20 ml Reaktionslösung, bestehend aus 10 mM Desmetryn (Templat), 50 mM AMPS (funktionelles Monomer), 100 mM MBAA (Vernetzer) und 0.1 mM BP in Wasser, überschichtet. Die Petrischale wird mit einer Glasplatte (Tief-UV-Filter, 1 > 310 nm) abgedeckt. Nach 30 min erfolgt die Belichtung an einem UV-Trockner (Beltron GmbH) bei Halblast für insgesamt 10 min (10 Passagen durch die Belichtungszone). Anschließend wird die Membran intensiv mit Methanol, Wasser, 50 mM Salzsäure, Wasser und wieder Methanol gewaschen. Danach wird getrocknet und gravimetrisch der Modifizierungsgrad (DG, bezogen auf die äußere Membranoberfläche) bestimmt. Eine nicht molekular geprägte Kontrollprobe wird nach analoger Vorschrift, aber ohne Templat, präpariert. Ergebnisse für variierte Präparationsbedingungen (pH-Wert, Salzkonzentration) zeigt Tabelle 3.

*Beispiel* 5. Anwendung von Desmetryn-geprägten Polypropylenmembranen zur Anreicherung von Herbiziden (Festphasenextraktion)

Eine Probe (4.9 cm$^2$) einer entsprechend Beispiel 4 funktionalisierten Membran (vgl. Tabelle 3) wird in einen Filterhalter aus Stahl mit Luer-Lock-Anschluß (Schleicher & Schuell, Dassel) montiert. 10 ml einer Lösung von Desmetryn mit einer Konzentration im Bereich von 10$^{-7}$ bis 10$^{-5}$ M in Wasser werden aus einer Spritze mit einer Geschwindigkeit von 10 ml/min quantitativ durch die Membran filtriert. Anschließend werden das Filtrat sowie 10 ml der Rohlösung mit jeweils 10 ml Chloroform extrahiert; die Herbizidkonzentrationen werden dann mit Hilfe der Gaschromatographie (Trennsäule HP5MS; Hewlet Packard GC System HP 6890 mit Masse-selektivem Detektor HP 5973) quantitativ bestimmt und auf diese Weise die in der Membran gebundene Menge ermittelt.

Repräsentative Ergebnisse sind in Tabelle 4 zusammengefaßt. Für beide Matrixmembranporengrößen weisen die *TGP*-Membranen deutlich (TGP 1) bzw. siginifikant (TGP 2) höhere Affinitäten für das Herbizd auf, während die mit einem chemisch ähnlichen, aber nicht geprägten Polymer modifizierten Membranen verglichen mit unmodifiziertem PP leicht erhöhte (K1) oder sogar geringere (K 2) Werte aufweisen.

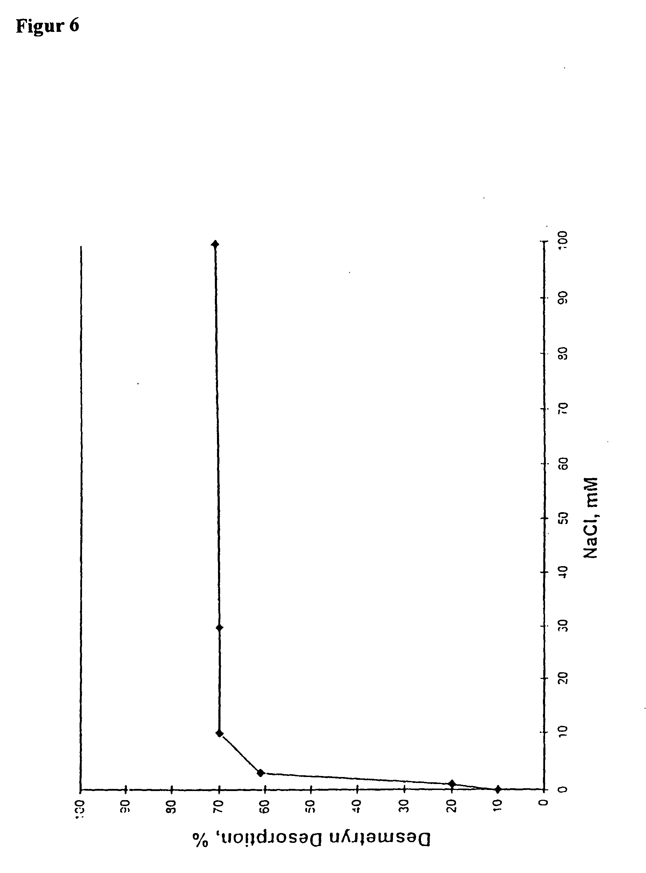

Das *TGP*-gebundene Herbizid kann durch pH-Wechsel oder erhöhte Salzkonzentration wieder aus der Membran eluiert werden; ein Beispiel zeigt Fig. 6.

In prinzipiell analoger Weise konnte das Herbizid aus einer 2*10$^{-9}$ M Lösung bei einer Wiederfindung von 90 % 1000fach angereichert werden; d.h. eine substanzspezifische Festphasenextraktion kann sowohl zur Aufreinigung als auch zur Aufkonzentrierung genutzt werden.

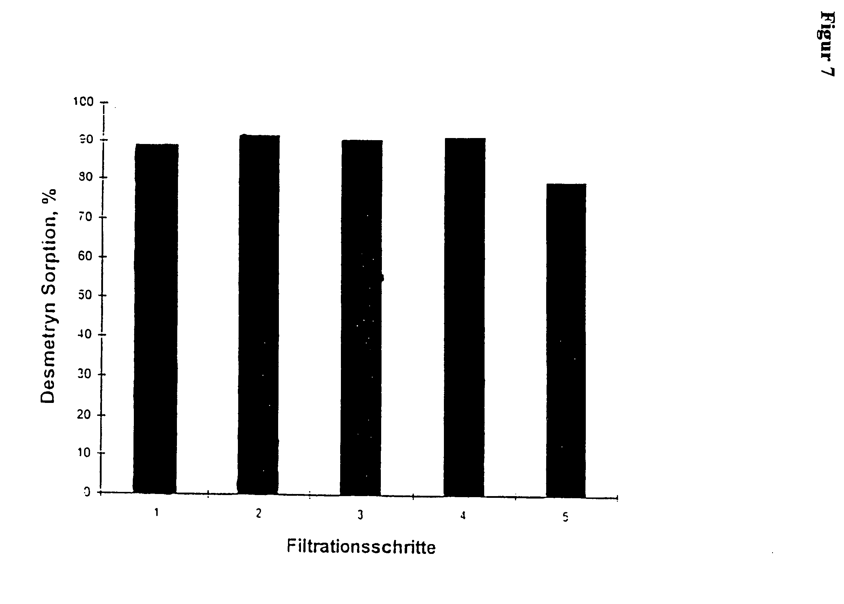

Die *TGP*-Membranen sind ohne Verlust an Spezifität und Kapazität nach einer einfachen Regeneration wiederholt einsetzbar, d.h. eine Anwendung zur Dekontamination ist so möglich (s. Fig. 7).

*Beispiel* 6. Substanz- bzw. Gruppenspezifität von Desmetryn-geprägten Polypropylenmembranen

Eine Probe (4.9 cm$^2$) einer entsprechend Beispiel 4 funktionalisierten Membran (TGP 1, s. Tabelle 3) wird wie in Beispiel 5 beschrieben getestet: 10 ml einer Lösung des jeweiligen Herbizids (Desmetryn, Terbumeton, Terbutryn oder Terbutylazin) mit einer Konzentration von 10$^{-5}$ M in Wasser werden aus einer Spritze mit einer Geschwindigkeit von 10 ml/min quantitativ durch die Membran filtriert. Anschließend erfolgt wie in Beispiel 5 beschrieben die quantitative Analytik.

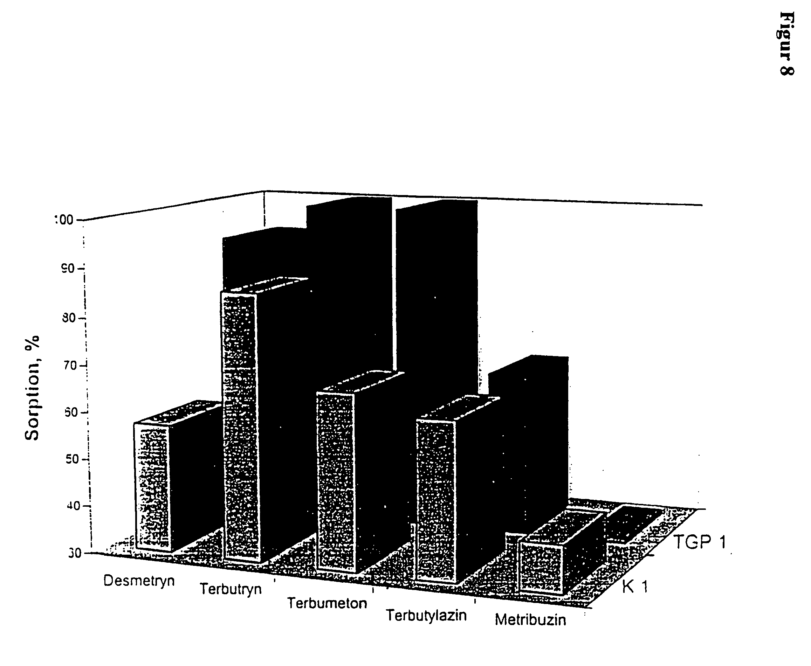

Aussagen zu der Spezifität des Prägens und der Gruppenspezifität der *TGP*-Membranen können aus den in Fig. 8 dargestellten Ergebnissen abgeleitet werden.

Für das Templat Desmetryn sowie Terbutryn und Terbumeton (jeweils Methoxy- bzw. Methylthio-substituierte s-Triazine) ist die Affinität von *TGP* größer als die von K. Für Terbutylazin (Chlor-substituiertes s-Triazin) sowie das 1,2,4-Triazin Metribuzin ist dagegen keine Spezifität zu beobachten. D.h., die Spezifität wird durch das Prägen erzeugt; auch Substanzen mit identischer Hydrophilie/phobie-Balance (Terbumeton und Terbutylazin, jeweils lg $k_{ow}$ = 3.04) werden aufgrund eines unterschiedlichen molekularen Details (Methoxy- vs. Chlor-Substituent) unterschiedlich durch den synthetischen Rezeptor gebunden ("Fit"). Es resultiert eine Gruppenspezifität für s-Triazine mit ähnlicher Substitution ("Polyklonalität", in Analogie zu Antikörpern).

*Beispiel* 7. Affinität von unterschiedlichen Desmetryn-geprägten Polypropylenmembran für Herbizide aus wäßrigen Pufferlösungen

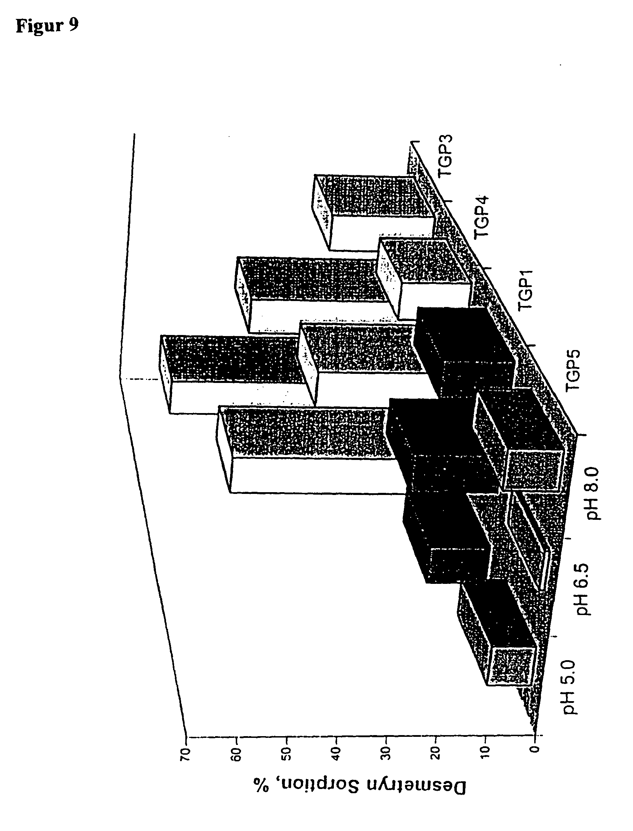

Eine Probe (4.9 cm$^2$) einer entsprechend Beispiel 4 funktionalisierten Membran (s. Tabelle 3) wird wie in Beispiel 5 beschrieben getestet: 10 ml einer Lösung von Desmetryn mit einer Konzentration von 10$^{-5}$ M in Pufferlösungen mit unterschiedlichem pH-Wert werden aus einer Spritze mit einer Geschwindigkeit von 10 ml/min quantitativ durch die Membran filtriert. Anschließend erfolgt wie in Beispiel 5 beschrieben die quantitative Analytik (s.Fig. 9).

Es ist zu sehen, daß bei den aus salzfreien Lösungen polymerisierten *TGP*-Membranen (vgl. Tabelle 3) die Affinität für die Herbizidbindung aus Pufferlösungen gering ist. Auch eine Synthese bei pH = 5.5, d.h. mit dem Natriumsalz des funktionellen Monomers AMPS, ergibt ähnlich geringe Affinitäten. Dagegen weisen die bei niedrigem pH unter Salzzusatz synthetisierten *TGP* bemerkenswert hohe Affinitäten für die Herbizidbindung aus 50 mM Pufferlösungen auf. Bei höheren pH-Werten sinkt die Affinität der *TGP*, offensichtlich, da die Salzbildung immer stärker mit der Bindung des Herbizids im synthetischen Rezeptor konkurriert.

*Beispiel* 8. Ersatz von biologischen Rezeptoren (hier Anti-Atrazin-Antikörper) in Assays durch TGP-Oberflächen

Wells von 96er Mikrotiterplatten aus Polystyren wurden unter analogen Bedingungen wie in Beispiel 4 beschrieben, aber mit Atrazin als Templat, modifiziert:

Zunächst werden pro Well 250 μl einer 100 mM Lösung von BP (Photoinitiator) in Methanol pipettiert, und die Mikrotiterplatte wird für 60 min geschüttelt. Die Lösung wird entfernt und anschließend werden pro Well 250 µl der Reaktionslösung, bestehend aus 10 mM Atrazin (Templat), 50 mM AMPS (funktionelles Monomer), 100 mM MBAA (Vernetzer) und 0.1 mM BP in Wasser pipettiert. Die Mikrotiterplatte wird mit einer Glasplatte (Tief-UV-Filter, 1> 310 nm) abgedeckt. Nach 60 min erfolgt die Belichtung an einem UV-Trockner (Beltron GmbH) bei Halblast für insgesamt 10 min (10 Passagen durch die Belichtungszone). Anschließend wird die Mikrotiterplatte intensiv mit Methanol, Wasser, 50 mM Salzsäure, Wasser und wieder Methanol gewaschen sowie anschließend getrocknet.

Die auf diese Weise erhaltenen modifizierten Oberflächen der Wells zeigen das Verhalten von künstlichen Antikörpern für Atrazin, was sich in einem kompetitiven Triazin-Assay nutzen läßt:

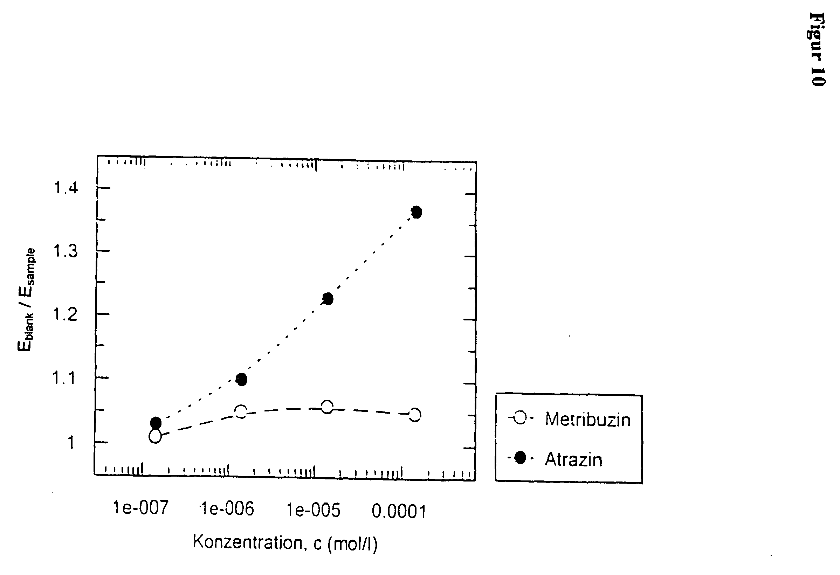

In unterschiedlichen modifizierten Wells werden jeweils 50 µl einer Lösung von Herbizid (Atrazin oder Metribuzin) in Konzentrationen von $10^{-7}$ bis $10^{-4}$ M in Wasser sowie 50 µl Atrazin-Peroxidase-Konjugate-Lösung (aus dem Pestanal Atrazin ELISA Kit; Riedel de Haen) pipettiert und unter Schütteln bei Raumtemperatur für 2 Stunden inkubiert. Anschließend erfolgen Waschen, Entwickeln sowie Stoppen entsprechend der Vorschrift des kommerziellen Assays (vgl. o.). Die Extinktionen bei 450 nm werden in einem Mikrotiterplattenlesegerät gemessen. Ergebnisse sind in Fig. 10 dargestellt. Mit unmodifizierten Mikrotiterplatten werden keine siginifikanten Extinktionsänderungen erhalten.

Tabelle 3: Präparation von Desmetryn-geprägten PP-Membranen (Beschichtung mit BP; Lösungen in Wasser; 10 min UV-Belichtung bei Raumtemperatur).

|  | Poren, $d_p$ (µm) | Desmetryn c (mM) | Salzzusatz (c = 50 mM) | pH | Funktionalisierungsgrad DG (µg/cm$^2$) |
|---|---|---|---|---|---|
| TGP1 | 0.2 | 10 |  | 1.5 | 863 |
| K1 | 0.2 | - |  | 1.5 | 724 |
| TGP2 | 0.6 | 10 |  | 1.5 | 178 |
| K2 | 0.6 | - |  | 1.5 | 132 |
| TGP3 | 0.2 | 10 | NaCl | 1.5 | 800 |
| K3 | 0.2 | - | NaCl | 1.5 | 430 |
| TGP4 | 0.2 | 10 | $Na_3PO_4$ | 2.1 | 933 |
| K4 | 0.2 | - | $Na_3PO_4$ | 2.1 | 343 |
| TGP5 | 0.2 | 10 | $Na_3PO_4$ | 5.1 | 1102 |
| K5 | 0.2 | - | $Na_3PO_4$ | 5.1 | 559 |

Tabelle 4: Desmetrynsorption aus $10^{-5}$ M Lösungen des Herbizids in Wasser in Desmetryn-geprägten Polypropylenmembranen sowie Kontrollproben (Filtrationsgeschwindigkeit 10 ml/min).

| Membran |  | DG (µg/cm$^2$) | Desmetrynsorption (%) |
|---|---|---|---|
| PP | (0.2 µm) | - | 48 |
| TGP 1 | (0.2 µm) | 863 | 92 |
| K 1 | (0.2 µm) | 724 | 57 |
| PP | (0.6 µm) | - | 12 |
| TGP 2 | (0.6 µm) | 178 | 16 |
| K 2 | (0.6 µm) | 132 | 8 |

**Abkürzungsverzeichnis**

| AA | Acrylsäure, |
|---|---|
| AMPS | 2-Acyloylamino-propan-2-sulfonsäure |
| BP | Benzophenon |
| DG | Funktionalisierungsgrad |

| EDMA | Ethylenglycolbismethacrylat, |
|---|---|
| FM | Funktionelles Monomer |
| FTIR-ATR-Spektroskopie - | Fourier Transform Infrared - Attenuation of Total Reflexion; Infrarotspektroskopie mit Abschwächung der Totalreflexion |
| K | Kontrolle, synthetisiert ohne Templat |
| lg $k_{OW}$ | Verteilungskoeffizient 1-Octanol/Wasser |
| LM | Lösungsmittel |
| MBAA | N,N'-Methylenbisacrylamid |
| MF | Mikrofiltration |
| MIP | Molekular geprägte Polymere |
| PhI | Photoinitiator |
| PP | Polypropylen |
| REM | Raster-Elektronen-Mikroskop |
| T | Templat |
| TGM | Templat-geprägte Membranen |
| TGP | Templat-geprägte Polymere |
| UF | Ultrafiltration |
| V | Vernetzer |

**Legende zu den Figuren**

Figur 1:

Schematische Darstellung der Synthese von Templat-geprägten Polymeren (TGP):

Templat-spezifische Bindungsstellen ("Templatabdrücke") werden durch vernetzte Polymerisation funktioneller Monomere oder Vernetzung funktioneller Polymere in Gegenwart eines Templats und anschließendes Auswaschen des Templats erzeugt.

Figur 2:

Schematische Darstellung der Modifizierung der Oberfläche vom Membranen mit Templat-geprägten Polymeren - Herstellung von Templat-geprägten Membranen (TGM): Templat-spezifische Bindungsstellen ("Templatabdrücke") werden durch photoinitiierte vernetzte Pfropfcopolymerisation funktioneller Monomere in Gegenwart eines Templats und anschließendes Auswaschen des Templats erzeugt.

Figur 3:

Strukturtypen von TGM:

a) Templatabdrücke innerhalb oder/und an der Oberfläche einer vernetzten Pfropfcopolymerschicht, die an der Membranoberfläche fixiert ist
b) Templatabdrücke direkt an der Membranoberfläche unter Beteiligung des Matrixpolymers

Figur 4:

Anwendungen von TGM:

a) Perfusion einer Lösung oder gasförmigen Mischung mit Templat durch die Membran
b) Applikation einer Lösung oder gasförmigen Mischung mit Templat auf die Membran.

In beiden Fällen kann anschließend zunächst Waschen und danach Elution bzw. direkte Analytik des Templats erfolgen.

Figur 5

Adsorptionskapazität einer molekular geprägten PP-Membran als Funktion der applizierten Stoffmenge eines ausgewählten Herbizids (Terbumeton).

PP-unmod: unmodifizierte PP-Membran
PP-K3: ohne Anwesenheit von Templat modifizierte Membran (Kontrolle)
PP-MIP3: molekular geprägte PP-Membran

Figur 6:

Freisetung von in Desmetryn-geprägten PP-Membranen (TGP 1) gebundenem Desmetryn (nach Sorption aus $10^{-5}$ M Lösungen des Herbizids in Wasser) durch Filtration / Elution von / mit 10 ml Salzlösung.

Figur 7:

Wiederholte Anwendung von Desmetryn-geprägten PP-Membranen (TGP 1) zur Sorption von Desmetryn aus $10^{-5}$ M Lösungen des Herbizids in Wasser (Regeneration durch Waschen mit 50 ml Salzsäure und Wasser).

Figur 8:

Sorption verschiedener Herbizide aus $10^{-5}$ M Lösungen in Wasser in Desmetryn-geprägten PP-Membranen (TGP 1; Filtrationsgeschwindigkeit 10 ml/min).

Figur 9:

Einfluß des pH-Wertes auf die Sorption von Desmetryn aus $10^{-5}$ M Lösungen in 50 mM Phosphatpuffer in Desmetryn-geprägten PP-Membranen (Filtrationsgeschwindigkeit 10 ml/min).

Figur 10:

Kalibrieren für die quantitative Bestimmung von Atrazin mit Atrazin-TGP-funktionalisierten Mikrotiterplatten ohne Anti-Atrazin-Antikörper (Metribuzin als Kontrolle).

**Patentansprüche**

1.   Verfahren zur Herstellung eines Templat-geprägten Materials umfassend ein Templat-geprägtes Polymer und einen festen Träger, wobei das Material geeignet ist, ein Templat spezifisch zu binden, wobei zur Herstellung des Materials an einer Oberfläche des Trägers eine photochemisch initiierte heterogene vernetzende Pfropfcopolymerisation funktioneller Monomere in Gegenwart des Templats initiiert wird und das Polymer an der Trägeroberfläche kovalent gebunden wird, **dadurch gekennzeichnet, dass** für die Polymerisation ein Initiator vom H-Abstraktionstyp verwendet wird, der nach Lichtanregung Radikale auf der Trägeroberfläche durch H-Abstraktion erzeugt, so dass das Trägermaterial als Co-Initiator funktioniert, wobei in Falle eines hydrophoben Trages ein hydrophober Photoinitiator verwendet wird und im Falle eines hydrophilen Tragers ein hydrophilen Photoinitiator.

2.   Verfahren nach Anspruch 1, **dadurch gekennzeichnet, dass** als Trägermaterial ein Material eingesetzt wird, das ausgewählt ist aus der Gruppe umfassend

a) organische Polymere, insbesondere Polypropylen, Polyethylen, Polystyren, Polysulfon, Polyamid, Polyester, Polycarbonat, Polyacrylnitril, Polyvinylidenfluorid, Polyacrylat, Polyacrylamid, Cellulose, Amylose, Agarose sowie deren Copolymere oder Blends und
b) poröse Festkörper, insbesondere Gläse oder Silikate sowie deren Komposite, auch mit organischen Polymeren.

3.   Verfahren nach einem der Ansprüche 1 oder 2, **dadurch gekennzeichnet, dass** als Träger Filme, Membranen, Fasern, Hohlfasern, Gewebe, Vliese oder Partikel, jeweils nichtporös oder porös, eingesetzt werden, insbesondere eine Membran.

4.   Verfahren nach Anspruch 3, **dadurch gekennzeichnet, dass** ausgehend von einer porösen Membran die Polymerisation unter Erhalt der makroporösen Struktur und spezifischen Oberfläche der Membran zur Herstellung der Templat-geprägten Membran (TGM) durchgeführt wird.

**5.** Verfahren nach Anspruch 3, **dadurch gekennzeichnet, dass** Membranen mit symmetrischer oder asymmetrischer Porenstruktur und Porengrößen zwischen 100
nm bis 5 μm eingesetzt werden.

**6.** Verfahren nach einem der vorhergehenden Ansprüche, **dadurch gekennzeichnet, dass** als Templat Moleküle mit Molekülmassen unter oder um 100 Da, insbesondere Herbizide, Wirkstoffe oder Aminosäuren; oder Moleküle aus der Gruppe der Peptide, Proteine, Nukleinsäuren oder Kohlehydrate; oder Partikel, insbesondere Viren, Bakterien oder Zellen, verwendet werden.

**7.** Verfahren nach einem der vorhergehenden Ansprüche, **dadurch gekennzeichnet, dass** als funktionelles Monomer polymerisationsfähige Verbindungen mit zur Wechselwirkung, umfassend elektrostatische oder hydrophobe Wechselwirkungen und reversible kovalente oder nichtkovalente Bindungen, mit dem Templat befähigten Gruppen, insbesondere Carboxyl-, Sulfonyl-, Sulfat-, Phosphat-, Amino- oder quartären Ammonium-Gruppen und deren Gemische, eingesetzt werden.

**8.** Verfahren nach einem der vorhergehenden Ansprüche, **dadurch gekennzeichnet, dass** im Gemisch mit den funktionellen Monomeren auch Vernetzermonomere sowie Lösungsmittel für alle Komponenten des Reaktionsgemisches eingesetzt werden.

**9.** Verfahren nach einem der vorhergehenden Ansprüche, **dadurch gekennzeichnet, dass** durch eine nachträgliche oder vorherige zusätzliche Funktionalisierung oder Beschichtung des Templat-geprägten Materials die Selektivität gegenüber dem Templat erhöht wird.

**10.** Verfahren nach einem der vorhergehenden Ansprüche, **dadurch gekennzeichnet, dass** durch den Zusatz von Salz während der Polymerisation die Bindungsspezifität und -kapazität des Templat-geprägten Polymers für das Templat erhöht wird.

**11.** Verfahren nach einem der vorhergehenden Ansprüche, **dadurch gekennzeichnet, dass** das Templat nach der Pfropfcopolymerisation nicht aus den Templatabdrücken entfernt wird.

**12.** Verfahren nach einem der vorhergehenden Ansprüche, **dadurch gekennzeichnet, dass** als Photoinitiator Benzophenon oder Benzophenoncarbonsäure verwendet wird.

**Claims**

**1.** Method for producing a template-imprinted material comprising a template-imprinted polymer and a solid carrier, wherein the material is suitable for binding a template in a specific manner, wherein, for producing the material, a photochemically initiated heterogeneous cross-linking graft copolymerization of functional monomers is initiated on a surface of the carrier in the presence of the template and the polymer is covalently bound to the surface of the carrier, **characterized in that** an initiator of the H-abstraction type is used for polymerization, said initiator generating, after being excited by light, radicals on the surface of the carrier by H-abstraction so that the carrier material functions as a coinitiator, wherein a hydrophobic photoinitiator is used in the case of a hydrophobic carrier and a hydrophilic photoinitiator is used in the case of a hydrophilic carrier.

**2.** Method according to claim 1, **characterized in that** a material selected from the group comprising

a) organic polymers, in particular polypropylene, polyethylene, polystyrene, polysulfone, polyamide, polyester, polycarbonate, polyacrylonitrile, polyvinylidene fluoride, polyacrylate, polyacrylamide, cellulose, amylose, agarose, and their copolymers or blends, and
b) porous solids, in particular glasses or silicates and their composites, also with organic polymers

is used as a carrier material.

**3.** Method according to any one of claims 1 or 2, **characterized in that** films, membranes, fibers, hollow fibers, fabrics, fleeces or particles, in each case non-porous or porous, are used as a carrier, in particular a membrane.

**4.** Method according to claim 3, **characterized in that** starting from a porous membrane, the polymerization for producing the template-imprinted membrane (TIM) is carried out maintaining the macroporous structure and specific surface of the membrane.

5. Method according to claim 3, **characterized in that** membranes are used that have a symmetrical or asymmetrical pore structure and pore sizes between 100 nm to 5 $\mu$m.

6. Method according to any one of the preceding claims, **characterized in that** molecules having molecular masses of below or about 100 Da, in particular herbicides, active substances or amino acids; or molecules from the group of peptides, proteins, nucleic acids or carbohydrates; or particles, in particular viruses, bacteria or cells, are used as a template.

7. Method according to any one of the preceding claims, **characterized in that** polymerizable compounds having groups capable of interacting with the template, in particular carboxyl, sulfonyl, sulfate, phosphate, amino or quaternary ammonium groups and their mixtures, are used as a functional monomer, said interacting comprising electrostatic or hydrophobic interactions and reversible covalent or non-covalent bonds.

8. Method according to any one of the preceding claims, **characterized in that** cross-linking monomers as well as solvents for all components of the reaction mixture are also used in the mixture with the functional monomers.

9. Method according to any one of the preceding claims, **characterized in that** the selectivity towards the template is increased by a posterior or previous additional functionalization or coating of the template-imprinted material.

10. Method according to any one of the preceding claims, **characterized in that** the binding specificity and binding capacity of the template-imprinted polymer for the template is increased by the addition of salt during the polymerization.

11. Method according to any one of the preceding claims, **characterized in that** the template is not removed from the template imprints after the graft copolymerization.

12. Method according to any one of the preceding claims, **characterized in that** benzophenone or benzophenone carboxylic acid is used as a photoinitiator.

**Revendications**

1. Procédé de fabrication d'un matériau texturé sur template, comprenant un polymère texturé sur template et un support solide, le matériau étant approprié pour lier spécifiquement un template, une copolymérisation de greffage réticulante hétérogène, initiée de façon photochimique, de monomètres fonctionnels étant initiée en présence du template pour la fabrication du matériau, et le polymère étant lié par covalence sur la surface du support, **caractérisé en ce que**, pour la polymérisation, il est utilisé un initiateur du type élimination de H qui, après sollicitation lumineuse, produit des radicaux sur la surface du support par élimination de H de sorte que le matériau support fonctionne en tant que co-initiateur, un photoinitiateur hydrophobe étant utilisé dans le cas d'un support hydrophobe et un photoinitiateur hydrophile étant utilisé dans le cas d'un support hydrophile.

2. Procédé selon la revendication 1, **caractérisé en ce que**, en tant que matériau support, il est utilisé un matériau qui est sélectionné parmi le groupe comprenant

a) des polymères organiques, en particulier polypropylène, polyéthylène, polystyrène, polysulfone, polyamide, polyester, polycarbonate, polyacrylnitrile, fluorure de polyvinylidène, polyacrylate, polyacrylamide, cellulose, amylose, agarose, ainsi que leurs polymères ou mélanges et
b) des solide poreux, en particulier des verres ou des silicates, ainsi que leurs composites, également avec des polymères organiques.

3. Procédé selon une des revendications 1 ou 2, **caractérisé en ce que**, comme supports, il est utilisé des films, des membranes, des fibres, des fibres creuses, des tissus, des non-tissés ou des particules, respectivement non poreux ou poreux, en particulier une membrane.

4. Procédé selon la revendication 3, **caractérisé en ce que**, en partant d'une membrane poreuse, la polymérisation est réalisée avec obtention de la structure macroporeuse et de la surface spécifique de la membrane pour la fabrication de la membrane structurée sur template (TGM).

5. Procédé selon la revendication 3, **caractérisé en ce que** des membranes avec structure de pores symétrique ou asymétrique et des tailles de pores entre 100 nm et 5 $\mu$m sont utilisées.

6. Procédé selon une des revendications précédentes, **caractérisé en ce que**, comme template, il est utilisé des molécules avec des masses moléculaires inférieures ou égales à 100 Da, en particulier des herbicides, des principes actifs ou des acides aminés ; ou des molécules issues du groupe des peptides, des protéines, des acides nucléiques ou des hydrate de carbone ; ou des particules, en particulier des virus, des bactéries ou des cellules.

7. Procédé selon une des revendications précédentes, **caractérisé en ce que**, en tant que monomère fonctionnel, il est utilisé des composés aptes à la polymérisation avec des groupes qualifiés pour l'interaction avec le template, en particulier des groupes carboxyle, sulfonyle, sulfate, phosphate, amino ou quaternaires et leurs mélanges, ladite interaction comprenant des interactions électrostatiques ou hydrophobes et des liaisons réversibles covalentes ou non covalentes.

8. Procédé selon une des revendications précédentes, **caractérisé en ce que**, dans le mélange avec les monomères fonctionnels, il est utilisé également des monomère de réticulation ainsi que des solvants pour tous les composants du mélange de réaction.

9. Procédé selon une des revendications précédentes, **caractérisé en ce que** la sélectivité vis-à-vis du template est augmentée par une fonctionnalisation ou un revêtement supplémentaire ultérieur(e) ou préalable du matériau structuré sur template.

10. Procédé selon une des revendications précédentes, **caractérisé en ce que** la spécificité et la capacité de liaison du polymère structuré sur template pour le template sont augmentées par addition de sel pendant la polymérisation.

11. Procédé selon une des revendications précédentes, **caractérisé en ce que** le template n'est pas enlevé des empreintes de template après la copolymérisation de greffage.

12. Procédé selon une des revendications précédentes, **caractérisé en ce que**, comme photoinitiateur, il est utilisé de la benzophénone ou de l'acide carboxylique de benzophénone.

**Figur 1**

**Figur 2**

(Photo)-Initiator +

hv / Δ

Photoinitiator +

hv

R

Molekular geprägte Affinitätsmembranen

**Figur 3**

**Figur 4**

1) Filtration

Filtrat

2) Waschen

3) Elution

Konzentrat

1) Applikation

TGM

2) Waschen

3) Analytik / Detektion

**Figur 5**

**Figur 6**

**Figur 7**

**Figur 8**

**Figur 9**

**Figur 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5766908 A
- DE 19609479
- US 5110833 A
- US 5372719 A
- US 5728296 A
- US 5756717 A
- US 5786428 A

**In der Beschreibung aufgeführte Nicht-Patentliteratur**

- **D. Sii ; A. Sadana.** *J. Biotechnol.,* 1991, vol. 19, 83
- Membrane Handbook. van Nostrand Reinhold, 1992
- **E. Klein.** Affinity Membranes. John Wiley & Sons, 1991
- **D. K. Roper ; E. N. Lightfoot.** *J. Chromatogr. A,* 1995, vol. 702, 3
- **G. Wulff.** *Angew. Chem.,* 1995, vol. 107, 1958
- **K. Mosbach ; O. Ramström.** *Bio/Technology,* 1996, vol. 14, 163
- **A.G. Mayes ; K. Mosbach.** *Trends Anal. Chem.,* 1997, vol. 16, 321
- **L. Andersson.** *Anal. Chem.,* 1996, vol. 68, 111
- **S. Hjerten ; J. L. Liao ; K. Nakazato ; Y. Wang ; G. Zamaratskaia ; H. X. Zhang.** *Chromatographia,* 1997, vol. 44, 227